# EUROPÄISCHE PATENTSCHRIFT

(11) **EP 1 149 432 B1**
(45) Veröffentlichungstag und Bekanntmachung des Hinweises auf die Patenterteilung: **20.06.2007**
(21) Anmeldenummer: 00982928.4
(22) Anmeldetag: 27.09.2000
(51) Int. Cl.: H01Q 13/24, H01Q 1/12, H01Q 19/06, H01Q 1/32, H01Q 25/00, G01S 3/04

(54) **ASYMMETRISCHER, MEHRSTRAHLIGER RADARSENSOR**
ASYMMETRICAL MULTI-BEAM RADAR SENSOR
DETECTEUR RADAR ASYMETRIQUE A PLUSIEURS FAISCEAUX

(30) Priorität: 06.10.1999 DE 19948025
(43) Veröffentlichungstag der Anmeldung: 31.10.2001
(73) Patentinhaber: ROBERT BOSCH GMBH, 70442 Stuttgart (DE)
(72) Erfinder: SCHMIDT, Ewald, 71634 Ludwigsburg (DE); LUCAS, Bernhard, 74354 Besigheim (DE); BEEZ, Thomas, 74189 Weinsberg (DE)
(86) Internationale Anmeldenummer: PCT/DE2000/003399
(87) Internationale Veröffentlichungsnummer: WO 2001/026183

(56) Entgegenhaltungen:
- EP-A- 0 498 524
- EP-A- 0 755 092
- WO-A-97/02496
- DE-A- 19 714 578
- US-A- 4 769 646
- SPENCER D G : "Novel millimeter ACC antenna feed " IEE COLLOQUIUM ON ANTENNAS FOR AUTOMOTIVES, 10. März 2000 (2000-03-10), Seiten 4/1-4/9, XP002160302 London, UK

## Beschreibung

### Stand der Technik

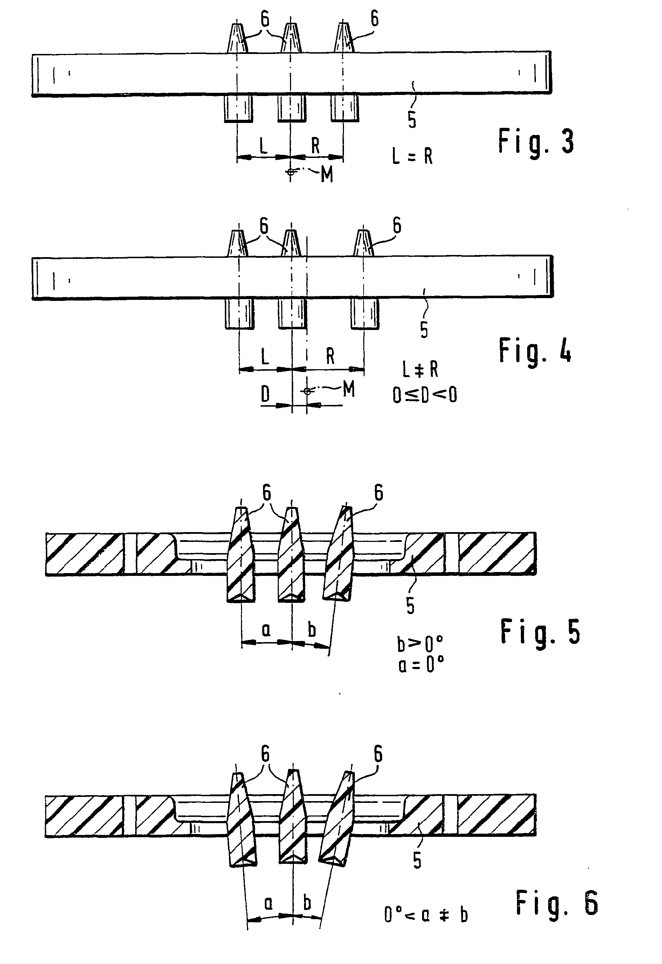

Die Erfindung geht aus von einem asymmetrischen, mehrstrahligen Radarsensor mit wenigstens zwei Sende- und Empfangspatches nach der Gattung des Hauptanspruchs. Bei den bisher bekannten mehrstrahligen Radarsensor mit Winkelauswertung, wie sie beispielsweise aus der WO 97/02496 bekannt sind, sind die seitlichen Empfangs- und Sendewege symmetrisch zu einer Mittelebene angeordnet. Die Mittelebene liegt bei vertikaler Winkeldetektion in horizontaler Richtung und umgekehrt bei horizontaler Winkeldetektion in vertikaler Richtung. Beispielsweise weisen die drei Sende- und Empfangspatches wegen der vorgegebenen elektrischen Polarisation die gleiche Richtungsneigung von 45° zur horizontalen Ebene auf (Figur 4). Dabei sind die zwei seitlichen Sende- und Empfangspatches bezüglich ihres Strahlzentrums jedoch symmetrisch zum mittleren Sende-/Empfangspatch angeordnet. Zu jedem Patch ist im Strahlgang ein Polyrod (Stielstrahler) positioniert, wobei die seitlichen Polyrods ebenfalls symmetrisch zur Mittelebene angeordnet sind. Zur weiteren Bündelung der Strahlung ist mindestens eine dielektrische Linse (Antennenlinse) vorgeschaltet, wobei die Linse bezüglich ihrer Geometrie rotationssymmetrisch oder mittelsymmetrisch ausgebildet ist.

Bekannt sind auch Mehrstrahlverfahren, bei denen statt der planaren Sende- und Empfangspatches (mit oder ohne Polyrod bzw. Superstrat, einer planaren dielektrischen Platte, die in bestimmtem Abstand zu den Sende-/Empfangspatches angeordnet ist.) Sende-/Empfangsanordnungen mit Übergängen auf Hornstrahlern. In den Strahlengängen der Hornstrahler können dabei dielektrische Stoffe zur Geometrieverkleinerung und zur weiteren Strahlbündelung eingebaut sein. Auch bei diesem Verfahren sind die nicht mittigen Strahlengänge von der Quelle bis zur äußersten Austrittsoberfläche des Radarsensors symmetrisch zur Mittelebene angeordnet.

Weiterhin ist aus der EP 04 98 524 A2 eine Anordnung für einen bistatischen Radarsensor bekannt. Bei diesem Radarsensor ist durch die getrennte Anordnung der Sende- und Empfangswege zwar eine Asymmetrie gegeben. Diese wird aber durch die seitliche Gesamtverschiebung aller Empfangselemente so kompensiert, daß das mittlere Empfangselement elektrisch die Mittellage erreicht und die seitlichen Empfangselemente gleiche Winkel links bzw. rechts zur Mittelebene abdecken.

Die Winkelbestimmung erfolgt für den Radarsensor nach bekannten Verfahren, wie sie beispielsweise aus der DE 195 43 813 bekannt sind.

Aus der EP 0 755 092 A2 ist eine Antennenanordnung aus dielektrischen Stabelementen bekannt, die für Microstrip-, Streifenleitungs-, Flächen- oder Schlitzstrahlerelemente geeignet sind. Hierzu wird ein dielektrisches Stabelement mit einem Flächen- oder Schlitzstrahler gekoppelt, wobei das dielektrische Stabelement eine verjüngten, hohlen Abschnitt aufweist. Gemäß einer Ausführungsform kann dieser dielektrische Stielstrahler hinsichtlich seiner Mittelachse gebogen ausgeführt sein.

Aus der US 4,769,646 ist eine Radarantennenanordnung mit mindestens einem Paar von Erregern bekannt, das mindestens ein Paar Linsenelemente aufweist und wobei das Linsenelement, das den Erregerelementen am nähesten ist, zur Strahlkonzentration des Sendestrahls ausgeführt ist und dass das weitere Linsenelement mit dem zweiten Erregerelement einen schwenkbaren Strahl erzeugt, in dem das weitere Linsenelement drehbar ausgeführt ist.

### Vorteile der Erfindung

Der erfindungsgemäße mehrstrahlige Radarsensor mit den kennzeichnenden Merkmalen des Hauptanspruchs hat demgegenüber den Vorteil, daß durch die asymmetrische Radaranordnung eine verbesserte Winkeldetektion entsteht.

Besonders vorteilhaft ist, daß man bei einer gegebenen störbehafteten Messung für das Signal-/Rausch-Verhältnis kleiner Streuwerte erhält. Durch die Asymmetrie der entsprechenden Normierungskurven von linken und rechten Strahlengängen ergeben sich vorteilhaft weniger ähnliche Winkelmuster, so daß Meßstreuungen einen kleineren Einfluß aufweisen. Die Folge sind weniger falsche Winkelzuordnungen.

Durch die in den abhängigen Ansprüchen aufgeführten Maßnahmen sind vorteilhafte Weiterbildungen und Verbesserungen des im Hauptanspruch genannten Radarsensors gegeben. Besonders vorteilhaft ist, daß durch einfache Geometrieänderungen in der Anordnung der Sende-/Empfangspatches zur Mittelebene bereits die gewünschte Asymmetrie der Strahlengänge entsteht.

Eine Asymmetrie des Strahlengangs erreicht man aber auch dadurch, daß die Polyrods mit ungleichem Abstand zur Mittelebene angeordnet sind.

Auch eine ungleiche Winkellage relativ zum Strahlengang zur Mittelebene der äußeren Polyrods sowie unterschiedliche Geometrien im Querschnitt sind einfache Maßnahmen, die fertigungstechnisch leicht vorzunehmen sind und auch leicht überprüfbar sind.

Günstig erscheint weiterhin, die Erzeugung eines asymmetrischen Strahlenganges durch geeignete dielektrische Materialien für die Polyrods zu erzeugen. Auf diese Weise läßt sich ein genauer und reproduzierbarer Aufbau der Anordnung durchführen, der fertigungstechnisch einfach zu realisieren ist.

Eine weitere Verbesserung erscheint auch dadurch gegeben, daß die dielektrische Linse asymmetrisch für den Bereich des Mittelstrahles ausgebildet ist. Die dielektrische Linse kann dadurch separat mit der gewünschten Geometrie gefertigt werden und dann mit den weiteren Elementen des Radarsensors zusammengebaut werden. Auf diese Weise läßt sich auch eine einfache Anpassung an verschiedene Sensorentypen erreichen.

Mit den erfindungsgemäßen Radarsensoren läßt sich eine sicherere und zuverlässigere Winkelauswertung erreichen, wie sie beispielsweise bei der Winkel- oder Abstandsmessung im Fahrzeugradar erforderlich ist.

### Zeichnung

Ausführungsbeispiele der Erfindung sind in der Zeichnung dargestellt und in der nachfolgenden Beschreibung näher erläutert.

Es zeigt Figur 1 eine Mikrowellenleiterschaltung mit drei Sende-/Empfangspatches eines bekannten Radarsystems, Figur 2 zeigt ein erstes Beispiel von asymmetrisch angeordneten Sende-/Empfangspatches, Figur 3 zeigt eine Polyrod-Halterung eines symmetrischen Radarsensors, Figur 4 zeigt asymmetrisch angeordnete Polyrods, die Figuren 5 und 6 zeigen asymmetrisch Polyrods mit ungleichen Winkellagen, die Figuren 7 und 8 zeigen in Draufsicht und im Schnitt bekannte Polyrods mit symmetrischem Querschnitt, die Figuren 9 und 10 zeigen in Draufsicht und im Schnitt ein fünftes Ausführungsbeispiel mit asymmetrischem Querschnitt eines Polyrods, die Figuren 11 bis 16 zeigen asymmetrischen Linsenanordnungen und die Figuren 17a, b bis 19a, b zeigen Diagramme mit Winkelmessungen.

### Beschreibung der Ausführungsbeispiele

Zunächst wird darauf hingewiesen, daß gleiche Bezugszeichen in den einzelnen Figuren die gleiche Bedeutung haben.

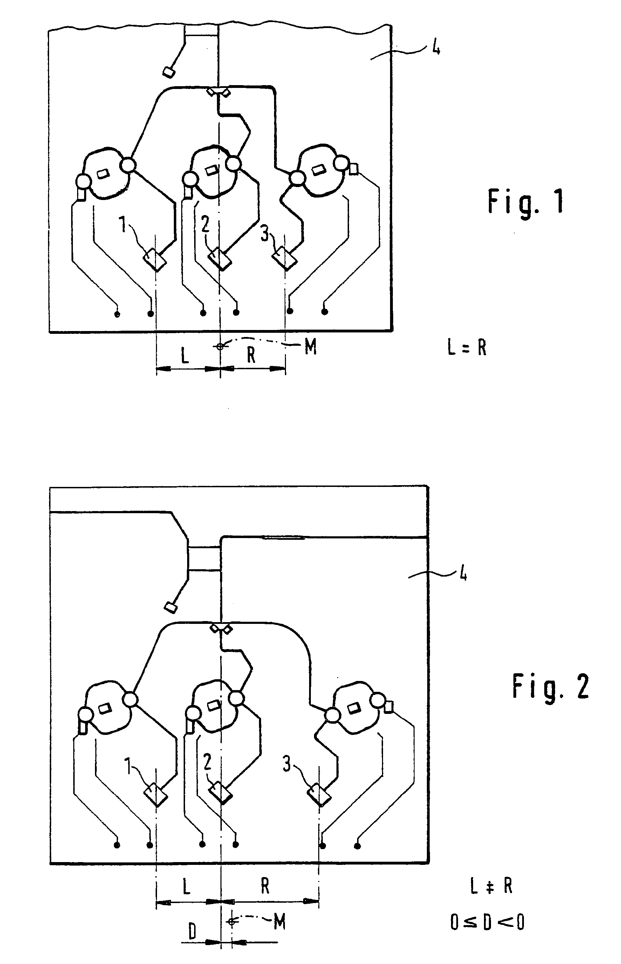

Figur 1 zeigt eine bekannte Schaltungsanordnung eines Mikrowellenleiters mit Sende-/Empfangspatches (im folgenden als Kurzform nur "Patches" genannt) 1, 2, 3. Sie sind symmetrisch zur Mittelebene M angeordnet. Das mittlere Patch 2 liegt auf der Mittelebene M, wobei die Abstände L, R zu den äußeren Patches 1, 3 gleich groß sind und das mittlere Patch in der Mittelebene M liegt.

Figur 2 zeigt ein erstes Beispiel bei dem die äußeren Patches 1, 3 mit unterschiedlichen Abständen L, R zum mittleren Patch 2 ausgebildet sind. Des Weiteren ist die gesamte Anordnung um den Abstand D von der Mittelebene M nach links verschoben. Natürlich ist alternativ auch eine Verschiebung nach rechts vorsehbar.

Ein zweites Beispiel ist in den Figuren 3 und 4 verdeutlicht. Figur 3 zeigt eine bekannte Anordnung von Polyrods 6 an einem Halter 5, bei denen der Abstand der Polyrods L, R gleich groß ist und das mittlere Polyrod 6 symmetrisch auf der Mittelebene M liegt, die sich vertikal über der Grundfläche der Polyrods 6 aufspannt. Aufgrund der symmetrischen Anordnung der Polyrods 6 sind hier die Strahlengänge der Sende- bzw. Empfangsstrahlen symmetrisch.

Beim zweiten Beispiel gemäß der Figur 4 ist dagegen die Anordnung der Polyrods 6 asymmetrisch, d. h. der Abstand L ist kleiner als der Abstand R zwischen den äußeren Polyrods 6 und dem mittleren Polyrod 6. Des Weiteren ist auch die gesamte Anordnung um den Abstand D von der Mittelebene M verschoben. Bei dieser asymmetrischen Anordnung der Polyrods 6 ergibt sich ebenfalls ein asymmetrischer Strahlengang für den Sende- bzw. Empfangsstrahl.

Figur 3 zeigt dagegen eine symmetrische Anordnung der Polyrods 6 eines bekannten Radarsensors.

Bei dem ersten und zweiten Ausführungsbeispiel der Figuren 5 bzw. 6 ist der seitliche Winkel a, b zu benachbarten Polyrods 6 verschieden. Im ersten Ausführungsbeispiel der Figur 5 sind die linken beiden Polyrods 6 parallel zueinander angeordnet. Daraus ergibt sich ein Winkel a = 0°. Das rechte Polyrod 6 hat zum mittleren Polyrod 6 einen Winkel b > 0°, da es seitlich geneigt ist.

Im Ausführungsbeispiel der Figur 6 ist dagegen sowohl der Winkel a als auch der Winkel b zwischen benachbarten Polyrods 6 unterschiedlich groß, so daß sich auch hier asymmetrische Strahlengänge ergeben. Zur Vollständigkeit wird noch erwähnt, daß die Polyrods 6 in einem Halter 5 befestigt sind, der beispielsweise im Spritz- oder Preßverfahren zusammen mit den Polyrods herstellbar ist.

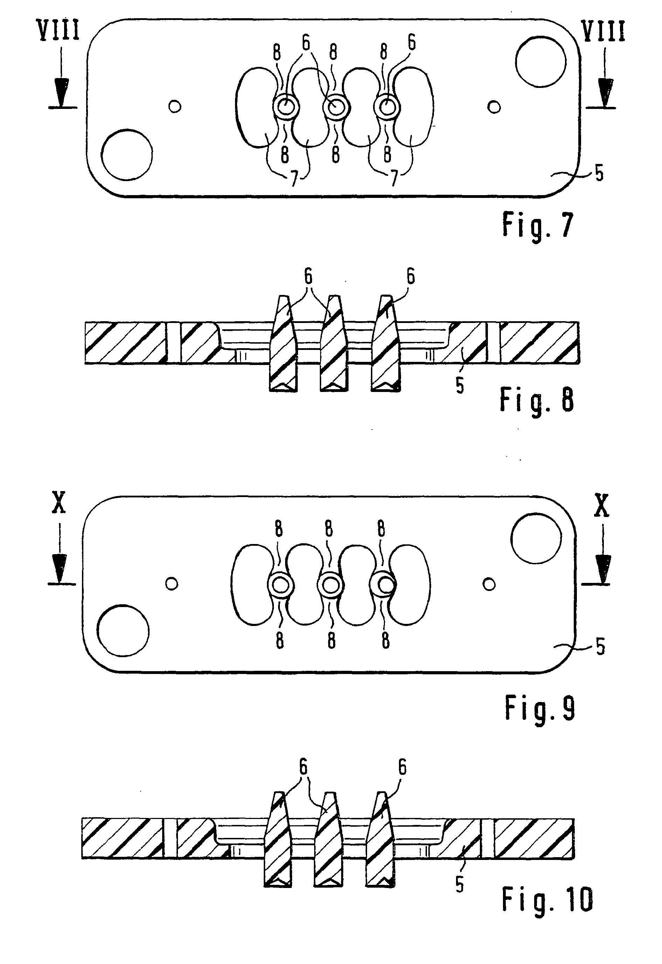

Die Figuren 7 und 8 zeigen in der Daraufsicht (Figur 7) bzw. im Schnitt (Figur 8) eine bekannte Ausführung, wie die Polyrods 6 in der Halterung 5 angeordnet sind. Zwischen den Polyrods 6 sind Aussparungen 7 vorgesehen, so daß sich für die Halterung 5 relativ schmale Zungen 8 ergeben, durch die Polyrods 6 fixiert sind.

Die Figuren 9 und 10 zeigen ebenfalls in Draufsicht (Figur 9) bzw. im Schnittbild (Figur 10) eine Anordnung von Polyrods 6 an einer Halterung 5. Die Anordnung der Polyrods 6 ist jedoch parallel und mit gleichem Abstand ausgebildet. Allerdings unterscheiden sich die Polyrods 6 in ihrem Querschnitt. Während der Querschnitt der linken beiden Polyrods 6 symmetrisch ist, ist er beim rechten Polyrod 6 unsymmetrisch ausgebildet, ein so genanntes "bended"-Polyrod. Durch diese asymmetrische Ausführungsform ergibt sich ebenfalls ein asymmetrischer Strahlengang.

Ein asymmetrischer Strahlengang läßt sich auch erreichen, indem die Polyrods 6 mit unterschiedlichem dielektrischen Material ausgebildet sind.

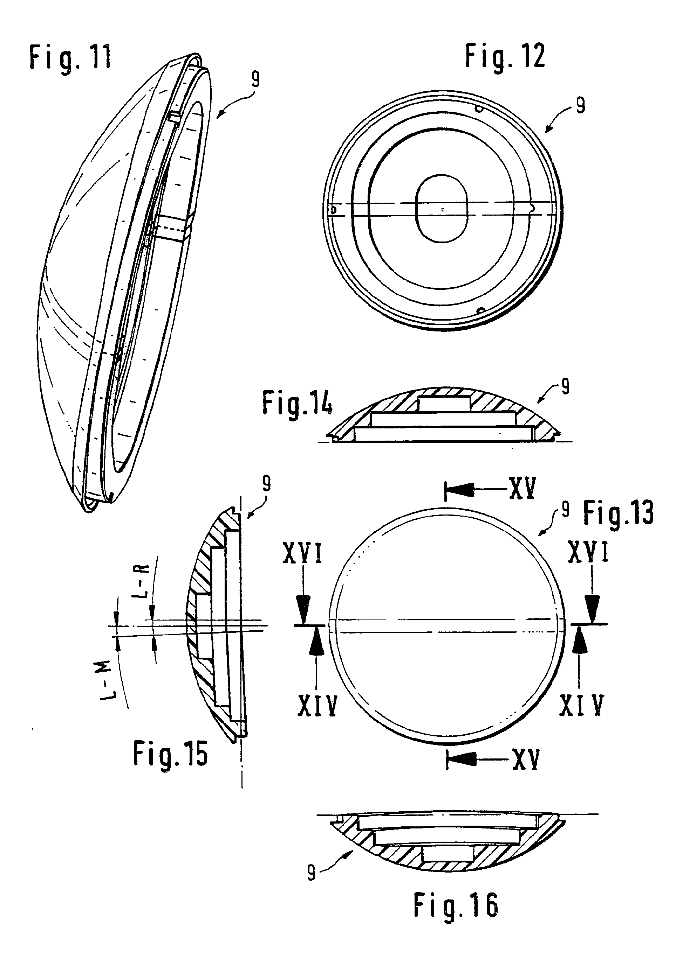

In den Figuren 11 bis 16 ist ein sechstes Ausführungsbeispiel der Erfindung dargestellt.

Die Figuren 6 bis 11 zeigen eine dielektrische Linse 9, die als Antennenlinse wirkt und entweder die Sendestrahlen abgibt oder reflektierte Strahlen empfängt.

Figur 11 zeigt die dielektrische Linse 9 in dreidimensionaler Darstellung. Hier ist insbesondere die unsymmetrische Ausbildung am oberen und unteren Rand erkennbar.

Figur 12 zeigt in der Daraufsicht die dielektrische Linse 9.

Die Figuren 13 bis 16 zeigen die dielektrische Linse 9 (Fig. 13), mit Schnittbildern S1 und S2, wie sie in den Figuren 14, 15 und 16 dargestellt sind. An den Schnittbildern der Figuren 14, 15, 16 ist erkennbar, daß die Mittellinie linksrechts bzw. links-mitte verschoben ist. Diese Verschiebungen sind unterschiedlich, so daß sie auch hier für den mittleren Strahlengang eine Asymmetrie ergibt.

Die gewünschte Asymmetrie kann auch dadurch erreicht werden, daß der mittlere Strahlengang außerhalb der Mittelebene M liegt. Die Abstände der äußeren Strahlengänge können dann sogar selbst wieder symmetrisch zur Mittelebene M sein.

Die einzelnen Ausführungsbeispiele der Erfindung können auch untereinander kombiniert werden. Dabei erscheint besonders vorteilhaft, die dielektrische Linse 9 zu variieren, da dann die anderen Teile des Radarsensors unverändert bleiben können. Dadurch erreicht man kürzere Entwicklungszeiten als wenn auch die anderen Teile, wie die Patches und/oder die Polyrods aufeinander abzustimmen sind.

In weiterer Ausgestaltung der Erfindung ist vorgesehen, die ganze Sende-/Empfangseinheit, jedoch ohne Linse 9, senkrecht zur Mittelebene M zu verschieben. Auch dadurch ergeben sich asymmetrische Strahlengänge für die Radarstrahlen.

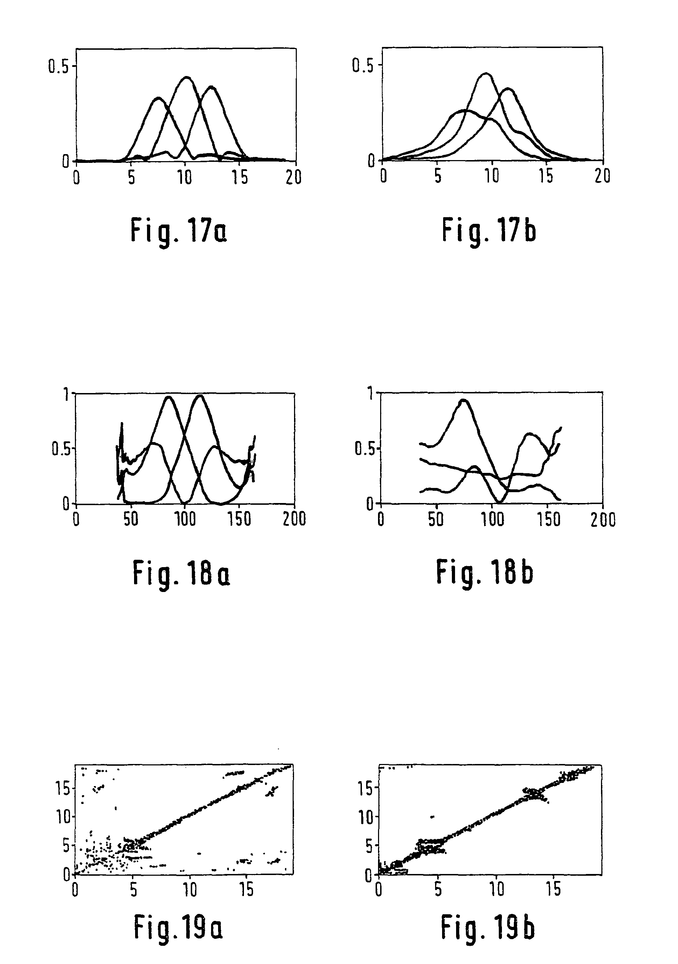

Im folgenden wird die Wirkungsweise der asymmetrischen Anordnungen des Erfindungsgegenstandes anhand der Figuren 17a bis 19b näher erläutert. Die Figuren 17a, 18a und 19a zeigen zum Vergleich Kurven von symmetrischen Anordnungen des Radarsensors, während die Figuren 17b, 18b, 19b Kurven von asymmetrischen Anordnungen zeigen. In den Figuren 17a und 17b sind die Amplituden von Echostrahlen dargestellt, wie sie von den drei Polyrods 6 gemessen wurden. Wie zu erwarten war, ist der Strahlengang bei der symmetrischen Anordnung (Figur 17a) von jedem Polyrod 6 symmetrisch. Dagegen sind bei der erfindungsgemäßen asymmetrischen Ausführungsform (Figur 17b) die einzelnen Strahlen mehr oder weniger asymmetrisch. Diese Asymmetrien werden noch deutlicher nach der Normierung erkennbar, wie sie in den Figuren 18a bzw. 18b dargestellt sind. Insbesondere in der Figur 18b ist eine starke Asymmetrie erkennbar. Aus diesen Kurven wird nach bekannten Rechenverfahren der Winkel bestimmt, wobei für die Winkelauswertung viele Einzelmessungen erforderlich sind. Die Figuren 19a und 19b zeigen Diagramme mit Winkelfehlern, wobei insbesondere störbehaftete Messungen für das Signal-/Rausch-Verhältnis z.B. bei 14 dB vorliegen. So ergibt sich aufgrund der Meßergebnisse bei der symmetrischen Ausführungsform (Figur 19a) ein mittlerer Fehlerbetrag von 3,146°. Dagegen beträgt der Fehlerbetrag der erfindungsgemäßen asymmetrischen Ausführungsform (Figur 19b) lediglich 1,977°. Dies ist eine erhebliche Verbesserung gegenüber dem bekannten Stand der Technik. Die Verbesserung kann damit erklärt werden, daß sich durch die Asymmetrie die Normierungskurven auf der linken und rechten Seite stärker voneinander unterscheiden als bei der symmetrischen Anordnung. Deshalb ergeben sich weniger ähnliche Winkelmuster. Meßstreuungen haben somit einen geringeren Einfluß.

## Patentansprüche

1. Mehrstrahliger Radarsensor mit wenigstens drei Sende- und Empfangspatches (1 bis 3) auf einem Träger (4), mit zugeordneten Polyrods (6) und mit einer dielektrischen Linse (9), wobei der Radarsensor monostatisch aufgebaut und derart ausgebildet ist, daß die Sende- oder Empfangsstrahlen bezüglich einer Mittelebene (M) des Radarsensors asymmetrische Strahlengänge aufweisen, wobei sich die Mittelebene (M) vertikal über der Grundfläche der Polyrods (6) aufspannt, und senkrecht zu der durch die Sende- und Empfangspatches definierten Linie ist, und die Linse in der Mitte schneidet, wobei der Abstand (L) zwischen dem ersten äußeren Polyrod und dem mittleren Polyrod kleiner ist als der Abstand (R) zwischen dem zweiten äußeren Polyrod und dem mittleren Polyrod und wobei die Polyrods (6) zur Mittelebene (M) mit ungleichem Abstand (D) angeordnet sind und die äußeren Polyrods (6) zur Mittelebene (M) mit ungleichen, seitlichen Winkeln (a, b) angeordnet sind und die Anordnung des mittleren Polyrods (6) und des Sende-/Empfangspatches (2) im Bezug auf die dielektrische Linse (9) derart verschoben ist, daß der Strahlengang des mittleren Polyrods außerhalb der Mittelebene (M) liegt.

2. Radarsensor nach Anspruch 1, **dadurch gekennzeichnet, daß** die Sende-/Empfangspatches (1 bis 3) zur Mittelebene (M) mit ungleichem Abstand angeordnet sind.

3. Radarsensor nach einem der vorherigen Ansprüche, **dadurch gekennzeichnet, daß** die seitlichen Polyrods (6) eine unterschiedliche Geometrie aufweisen.

4. Radarsensor nach einem der vorherigen Ansprüche, **dadurch gekennzeichnet, daß** die seitlichen Polyrods (6) aus unterschiedlichen dielektrischen Materialien aufgebaut sind.

5. Radarsensor nach einem der vorherigen Ansprüche, **dadurch gekennzeichnet, daß** dielektrische Linse (9) bezogen auf die Mittelebene (M) zur Erzeugung eines unsymmetrischen Mittelstrahles unsymmetrisch ausgebildet ist.

6. Radarsensor nach einem der vorherigen Ansprüche, **dadurch gekennzeichnet, daß** die Sende-/Empfangspatches (1 bis 3) mit den Polyrods (6) relativ zur dielektrischen Linse (9) seitlich verschoben zur Mittelebene (M) angeordnet sind.

7. Radarsensor nach einem der vorherigen Ansprüche, **dadurch gekennzeichnet, daß** der Radarsensor an einem Kraftfahrzeug angeordnet und zur Winkelauswertung ausgebildet ist.

## Claims

1. Multibeam radar sensor having at least three transmitting and receiving patches (1 to 3) on a mount (4), having associated polyrods (6) and having a dielectric lens (9), with the radar sensor being monostatic and being designed in such a manner that the transmitting or receiving beams have asymmetric beam paths with respect to a centre plane (M) of the radar sensor, with the centre plane (M) extending vertically above the footprint of the polyrod (6) and being at right angles to the line defined by the transmitting and receiving patches, and intersecting the lens in the centre, with the distance (L) between the first outer polyrod and the central polyrod being less than the distance (R) between the second outer polyrod and the central polyrod, and with the polyrods (6) being arranged at unequal distances (D) from the centre plane (M), and with the outer polyrods (6) being arranged at unequal, lateral angles (a, b) with respect to the centre plane (M), and with the arrangement of the central polyrod (6) and of the transmitting/receiving patch (2) with respect to the dielectric lens (9) being shifted in such a manner that the beam path of the central polyrod is located off the centre plane (M).

2. Radar sensor according to Claim 1, **characterized in that** the transmitting/receiving patches (1 to 3) are arranged at different distances from the centre plane (M).

3. Radar sensor according to one of the preceding claims, **characterized in that** the side polyrods (6) have a different geometry.

4. Radar sensor according to one of the preceding claims, **characterized in that** the side polyrods (6) are formed from different dielectric materials.

5. Radar sensor according to one of the preceding claims, **characterized in that** the dielectric lens (9) is asymmetric with respect to the centre plane (M), in order to produce an asymmetric central beam.

6. Radar sensor according to one of the preceding claims, **characterized in that** the transmitting/receiving patches (1 to 3) together with the polyrods (6) are arranged shifted laterally with respect to the centre plane (M), relative to the dielectric lens (9).

7. Radar sensor according to one of the preceding claims, **characterized in that** the radar sensor is arranged on a motor vehicle and is designed for angle evaluation.

## Revendications

1. Détecteur radar à plusieurs faisceaux comprenant au moins trois pastilles d'émission et de réception (1 à 3) sur un support (4), avec des antennes en cierge associées (6) et une lentille diélectrique (9), le détecteur radar étant conçu de manière monostatique et configuré de telle sorte que
- les faisceaux d'émission ou de réception présentent, par rapport à un plan médian (M) du détecteur radar, des trajectoires de faisceau asymétriques, le plan médian (M) étant tendu verticalement au-dessus de la surface de base des antennes en cierge (6) et perpendiculairement à la ligne définie par les pastilles d'émission et de réception, en coupant la lentille en son milieu,
- la distance (L) entre la première antenne en cierge extérieure et l'antenne en cierge centrale est inférieure à la distance (R) entre la deuxième antenne en cierge extérieure et l'antenne en cierge centrale,
- les antennes en cierge (6) sont à des distances inégales (D) par rapport au plan médian (M) et les antennes en cierge (6) extérieures sont disposées avec des angles latéraux inégaux (a, b) par rapport au plan médian (M), et
- la disposition de l'antenne en cierge centrale (6) et de la pastille d'émission/réception (2) est décalée par rapport à la lentille diélectrique (9) de telle sorte que la trajectoire de faisceau de l'antenne en cierge centrale se trouve en-dehors du plan médian (M).

2. Détecteur radar selon la revendication 1,
**caractérisé en ce que**
les pastilles d'émission/réception (1 à 3) sont à des distances inégales par rapport au plan médian (M).

3. Détecteur radar selon l'une des revendications précédentes,
**caractérisé en ce que**
les antennes en cierge latérales (6) présentent une géométrie différente.

4. Détecteur radar selon l'une des revendications précédentes,
**caractérisé en ce que**
les antennes en cierge latérales (6) sont en matériaux diélectriques différents.

5. Détecteur radar selon l'une des revendications précédentes,
**caractérisé en ce que**
la lentille diélectrique est asymétrique par rapport au plan médian (M) pour générer un faisceau central asymétrique.

6. Détecteur radar selon l'une des revendications précédentes,
**caractérisé en ce que**
les pastilles d'émission/réception (1 à 3) avec les antennes en cierge (6), sont relativement à la lentille diélectrique (9) latéralement décalées par rapport au plan médian (M).

7. Détecteur radar selon l'une des revendications précédentes,
**caractérisé en ce qu'**
il est monté sur un véhicule automobile et sert à l'exploitation angulaire.
